# EUROPÄISCHE PATENTANMELDUNG

(11) **EP 0 909 900 A2**
(43) Veröffentlichungstag der Anmeldung: **21.04.1999**
(21) Anmeldenummer: 98114593.1
(22) Anmeldetag: 04.08.1998
(51) Int. Cl.: F16D 13/71

(54) **Reibungskupplung, insbesondere für Kraftfahrzeuge**

(30) Priorität: 22.08.1997 DE 19736558
(71) Anmelder: DaimlerChrysler AG, 70567 Stuttgart (DE)
(72) Erfinder: Beitler, Hubert, 70806 Kornwestheim (DE); Tscheplak, Ernst, 71384 Weinstadt (DE)

(57) **Zusammenfassung**

Die Erfindung betrifft eine Reibungskupplung und Einrichtungen in der Betätigung dieser Reibungskupplung, durch die der Betätigungskraftverlauf, bzw. die Andrückkraft der Druckscheibe weitgehend unabhängig vom Verschleiß der Kupplungsscheibe gehalten wird. Der von der Tellerfeder (12) aufgebrachte Teil der Andrückkraft ist zumindest Teilweise kleiner als die der Kupplungsauslegung entsprechende Andrückkraft, der fehlende Kraftanteil wird über zusätzliche Federmittel (26) aufgebracht.

## Beschreibung

Die Erfindung betrifft eine Reibungskupplung, insbesondere für Kraftfahrzeuge, gemäß dem Oberbegriff des Anspruches 1.

Bei einer bekannten derartigen Reibungskupplung (DE 42 39 289 A1) ist die Druckplatte über eine Federanordnung beaufschlagt, die eine im Betätigungsweg der Kupplung liegende Tellerfeder und zusätzliche Blattfederelemente umfaßt über die die Druckplatte gegenüber dem Kupplungsgehäuse in Drehrichtung fixiert ist. Die Blattfederelemente erstecken sich in Umfangsrichtung, d. h. tangential zur Druckplatte und sind im Sinne des Abhebens der Druckplatte von der Kupplungsscheibe axial vorgespannt, also entgegen der von der Tellerfeder auf die Druckplatte ausgeübten Andrückkraft so daß über die Blattfedern die zum Ausrücken der Kupplung aufzubringende Betätigunskraft verringert wird. Diese Maßnahme steht in Verbindung, mit einer Nachstellvorrichtung, durch die der Schwenkpunkt der Tellerfeder zwischen deren radial äußeren Anlage an der Druckplatte und der radial inneren Abstützung gegen das Ausrücklager in Abhängigkeit vom Verschleiß derart axial, d. h. in Achsrichtung der Kupplung verstellt wird, daß die Federcharakteristik der Tellerfeder weitgehend erhalten bleibt, da der axiale Abstand zwischen dem Schwenkpunkt der Tellerfeder und der Druckplatte ungeachtet eines etwaigen Verschleißes der Kupplungsscheibe im wesentlichen gleich bleibt. Die verhältnismäßig kleinen Änderungen, die sich bei der verschleißabhängigen Nachstellung des Schwenkpunktes im Axialabstand zwischen dem Schwenkpunkt und der Anlage der Tellerfeder am Ausrücklager ergeben, können über die Blattfedern kompensiert werden, ohne daß deren der Andrückkraft der Tellerfeder entgegengerichtete Kraftwirkung die Funktionen der Kupplung beeinträchtigen würde.

Die Erfindung befaßt sich mit der gleichen Thematik und hat zum Ziel, Veränderungen in der von der Federanordnung auf die Druckplatte ausgeübten Andrückkraft, und dadurch bedingte Schwankungen in der Einspannkraft der Kupplungsscheibe mischen den dieser zugehörigen Anlageflächen auch bei Verschleiß der Kupplungsscheibe über deren Betriebsbereich zumindest weitgehend zu vermeiden, und dies auch ohne Verwendung einer in Abhängigkeit vom Verschleiß der Kupplungsscheibe arbeitenden Nachstellvorrichtung, so daß sich ein vereinfachter Kupplungsaufbau ergibt.

Erreicht wird dies durch die Merkmale des Anspruches 1, bei dem mit einer Federanordnung gearbeitet wird, die aus einer im Betätigungsweg der Kupplung liegenden Tellerfeder und zusätzlichen Federmitteln besteht, wobei die Auslegung der die Federanordnung bildenden Federelemente so getroffen ist, daß der von der Tellerfeder aufgebrachte Teil der Andrückkraft kleiner ist als die der Kupplungsauslegung entsprechende Andrückkraft über dem Betriebsbereich, so daß die Andrückkraft der Tellerfeder über den Betriebsbereich über einen Kraftanteil ergänzt werden muß, um die der Kupplungsauslegung entsprechende Andrückkraft überhaupt zu erreichen. Dieser fehlende Kraftanteil wird durch zusätzliche Federmittel aufgebracht, wobei diese Federmittel und die Tellerfeder in ihrem Kraft-Wegverlauf über dem Betriebsbereich der Kupplung so aufeinander angestimmt sind, daß sie sich zu einem gemeinsamen Kraft-Wegverlauf ergänzen, der zu einer über dem Betriebsbereich im wesentlichen gleichbleibenden Andrückkraft auf die Druckplatte führt. Der angesprochene Betriebsbereich umfaßt dabei ausgehend vom Neuzustand der Kupplung, also einer Kupplung, bei der die Kupplungsscheibe keine Verschleißerscheinungen aufweist, auch jene Stadien im Lebenslauf einer Kupplung in denen ein zunehmender Verschleiß der Kupplungsscheibe eintritt, bis diese auf das zulässige Maß abgenützt ist und somit ein Auswechseln der Kupplungsscheibe oder der Kupplung nötig ist.

Im Rahmen der Erfindung verwendete Tellerfedern können dabei den bei bekannten, über Tellerfedern betätigten Reibungskupplungen üblichen Kraft-Wegverlauf aufweisen, wie beispielsweise in Figur 8 der DE 42 39 289 A1 dargestellt, und somit einen Kraft-Wegverlauf haben, bei dem die Federkraft, und damit die Andrückkraft auf die Kupplungsscheibe mit zunehmenden Verschieß, also über dem Betriebsbereich ansteigt. Dieser Anstieg kann bei der erfindungsgemäßen Lösung dadurch kompensiert werden, daß der von den zusätzlichen Federmitteln aufgebrachte Kraftanteil entsprechend kleiner wird. Mit anderen Worten, Veränderungen im Kraft-Wegverlauf der Tellerfeder und der zusätzlichen Federmittel sind derart aufeinander abgestimmt, daß über die zusätzlichen Federmittel Abweichungen im Kraft-Wegverlauf der Tellerfeder über dem Betriebsbereich zumindest tendentiell, bevorzugt aber weitgehendst kompensiert werden, wobei die zusätzlichen Federmittel darüber hinaus noch einen Kraftanteil aufzubringen haben, durch den der von der Tellerfeder aufgebrachte Anteil der Andrückkraft, der kleiner ist als die auslegungsbedingte Andrückkraft, auf das der Auslegung entsprechende Niveau der Andrückkraft angehoben wird.

Die zusätzlichen Federmittel können sich dabei direkt auf die Kupplungsplatte, oder aber auch indirekt gegen die Kupplungsplatte, also beispielsweise auf die Tellerfeder abstützen.

Findet die Erfindung in einer Reibungskupplung Verwendung, in der eine Nachstellvorrichtung für die gehäuseseitige Abstützung der Tellerfeder vorgesehen ist, um verschleißbedingte Veränderungen in der Lage des Abstützpunktes gegenüber der Druckplatte und dadurch bedingte Änderungen im Kraft-Wegverlauf der Tellerfeder soweit wie möglich auszugleichen, so ist es zweckmäßig, die zusätzlichen Federmittel kupplungsgehäuseseitig derart an der Nachstellvorrichtung abstützen, daß die zusätzlichen Federmittel bezüglich ihres gehäuseseitigen Abstützpunktes mit dem Abstützpunkt der Tellerfeder verlagert werden, so daß die Tellerfeder und die zusätzlichen Federmittel in ihrem Kraft-Wegverlauf zueinander auch bei einem etwaigen Verschleiß der Kupplungsscheibe im wesentlichen unverändert bleiben. Im Rahmen der erfindungsgemäßen Lösung können die zusätzlichen Federmittel aber auch direkt gegenüber dem Kupplungsgehäuse abgestützt sein, und in Anpassung an konstruktive Gegebenheiten der Kupplung unterschiedliche Lagen zwischen der Druckplatte und dem Gehäuse wie auch zwischen dem Gehäuse und der Tellerfeder einnehmen, wenn sie sich gegen die Tellerfeder abstützen und wenn die Federkraft der zusätzlichen Federmittel über die Tellerfeder auf die Druckplatte übertragen wird.

Die zusätzlichen Federmittel können als Zug- oder Druckfedern ausgebildet sein, und sie sind in einer bevorzugten Ausbildung ebenfalls durch eine oder mehrere Tellerfedern, insbesondere eine Tellerfeder gebildet, da die Verwendung einer Zusatztellerfeder als zusätzliches Federmittel einen besonders einfachen Aufbau ermöglicht.

Die Erfindung ermöglicht es insgesamt, zu einem vereinfachten Kupplungsaufbau mit einer weitgehend verschleißunabhängigen Betätigungscharakteristik für die Kupplung zu kommen.

Weitere Einzelheiten und Merkmale der Erfindung ergeben sich aus den Ansprüchen. Ferner wird die Erfindung nachfolgend anhand von Zeichnungen noch naher erläutert. Es zeigen:
- Figur 1:: eine Schemadarstellung einer Kupplung für Kraftfahrzeuge,
- Figur 2:: in einem Kraft-Weg-Diagramm in grundsätzlicher Darstellung die Andrückkraft der Druckplatte auf die Kupplungsscheibe einerseits und die erforderliche Ausrückkraft andererseits,
- Fig. 3 und 4:: in schematisierter Darstellung zwei Ausgestaltungsformen der Erfindung mit einer die Druckplatte beaufschlagenden Federanordnung, die ergänzend zur von der Ausrückvorrichtung beaufschlagten Tellerfeder zusätzliche Federmittel umfaßt,
- Figur 5:: in einem Kraft-Weg-Diagramm in grundsätzlicher Darstellung die von der Tellerfeder und den zusätzlichen Federmitteln auf die Druckplatte ausgeübte Andrückkraft, und
- Fig. 6 bis 9:: verschiedene Ausgestaltungsformen einer Reibungskupplung gemäß der Erfindung, wobei jeweils unterschiedliche Anordnungen für die zusätzlichen Federmittel vorgesehen sind.

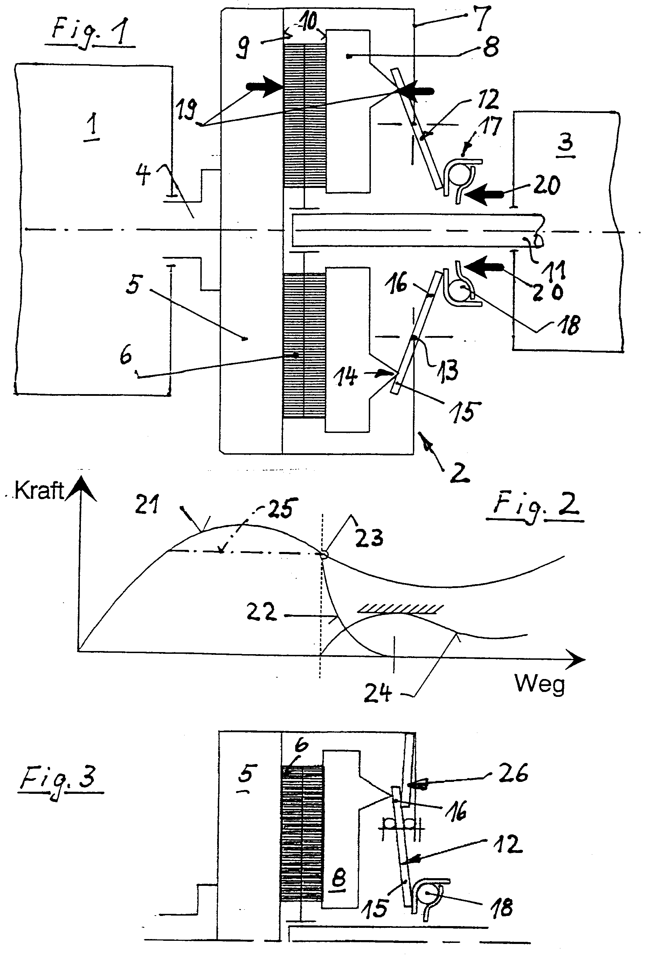

Figur 1 zeigt, stark schematisiert, die wesentlichen Teile eines Triebstranges eines Kraftfahrzeuges, nämlich den Motor 1 und das mit dem Motor 1 über die Kupplung 2 verbundene Getriebe 3, von dem aus der Antrieb, was nicht weiter dargestellt ist, zu den Rädern des Kraftfahrzeuges führt.

Die Kurbelwelle des Motores 1 ist mit 4 bezeichnet und drehfest mit einem Schwungrad 5 verbunden, das als Einmassen- oder Zweimassenschwungrad ausgebildet sein kann und das zugleich einen Bestandteil der Kupplung 2 bildet, deren Kupplungsscheibe 6 zwischen dem Schwungrad 5 und einer über das Kupplungsgehäuse 7 mit diesem drehfest verbundenen Druckplatte 8 liegt. Schwungrad 5 und Druckplatte 8 bilden Anlageflächen 9, 10 für die Kupplungsscheibe 6, die ihrerseits zentral drehfest auf einer zum Getriebe 3 führenden Welle 11, meist der Getriebeeingangswelle befestigt ist. Die Druckplatte 8 ist über eine Tellerfeder 12 beaufschlagbar, die ihrerseits am Kupplungsgehäuse 7 in einer Ringzone 13 schwenkbar abgestützt ist. Die Ringzone 13 liegt radial auf einem kleineren Durchmesser als die ebenfalls ringförmige Abstützung 14 zwischen der Tellerfeder 12 und der Druckplatte 8, wobei die Tellerfeder 12 in dem Ringbereich 15 zwischen den Abstützungen 13 und 14 bezüglich ihrer Andrückkraft gegen die Kupplungsscheibe 6 durch Änderung ihrer Konizität veränderlich ist. Hierauf wild anhand der Figur 2 noch näher eingegangen. Der radial innere, radial innerhalb der in der Ringzone 13 erfolgenden Schwenkabstützung der Tellerfeder 12 gegenüber dem Kupplungsgehäuse 7 liegende Ringbereich 16 der Tellerfeder 12 ist üblicherweise durch radial verlaufende Finger gebildet, die in ihrem radial inneren Endbereich über die Ausrückvorrichtung 17 mit dem Ausrücklager 18 beaufschlagbar ist. Die Ausrückvorrichtung 17 ist in nicht näher dargestellter Weise gegenüber dem Getriebe 3 drehfest abgestützt, wobei der Übergang zwischen der feststehenden Ausrückvorrichtung 17 und der mit der Kurbelwelle umlaufenden Kupplung 2 über das Ausrücklager 18 erfolgt.

In Figur 1 sind desweiteren über die Pfeile 19 die Kräfte veranschaulicht, durch die die Kupplungsscheibe 6 zwischen den Anlageflächen 9 und 10 verspannt ist. Ferner ist durch die Pfeile 20 die Ausrückkraft veranschaulicht, die seitens der Bedienperson des Fahrzeuges, im Regelfall also des Fahrers auf das Kupplungspedal aufzubringen ist, wenn über das Ausrücklager 18 der Ausrückvorrichtung 17 die Tellerfeder 12 derart verschwenkt werden soll, daß die auf die Druckplatte 8 ausgeübte Andrückkraft aufgehoben und die Druckplatte 8 von der Kupplungsscheibe 6 abgehoben wird, um über die Kupplung 2 Motor 1 und Getriebe 3 voneinander zu trennen.

Im eingerückten Zustand der Kupplung, der in Figur 1 dargestellt ist, ist, wie dargelegt, die Kupplungsscheibe 6 zwischen den Anlageflächen 9 und 10 des Schwungrades 5 und der Druckplatte 8 eingespannt, wobei die von der Druckplatte 8 ausgehende Andrückkraft über die Tellerfeder 12 aufgebracht wird. Diese von der Tellerfeder 12 aufgebrachte Andrückkraft ist in Figur 2 in einem Kraft-Weg-Diagramm schematisiert dargestellt und der entsprechende Kurvenzug ist mit 21 bezeichnet. Die Kupplungsscheibe 6 ist als zwischen Schwungrad 5 und Druckplatte 8 liegendes Reibelement mit entsprechenden Reibbelägen versehen und damit einem gewissen Verschleiß unterworfen, der im praktischen Einsatz zu einer verschleißbedingten Verringerung der Dicke der Kupplungsscheibe 6 führt. Nicht dargestellt ist in den Ausführungsbeispielen, daß die Kupplungsscheibe 6 üblicherweise auch axial federnd aufgebaut ist, was durch Belagfederelemente erreicht wird, die die Reibbeläge der Kupplungsscheibe 6 im Sinne einer Spreizung auseinanderdrücken und die, bei geschlossener Kupplung, soweit sie über die Andrückkraft der Tellerfeder nicht auf Block verspannt sind, in einem Gleichgewicht zu dieser in Figur 2 durch den Linienzug 21 symbolisierten Andrückkraft stehen. Die angesprochene Belagfederkraft als Spreizkraft ist in der Darstellung gemäß Figur 2 durch den Linienzug 22 veranschaulicht.

Mit 23 ist in Figur 2 der Betriebspunkt bezeichnet, in dem die Andrückkraft 21 und die Spreizkraft 22 im Gleichgewicht zueinander stehen, also im Regelfall jener Punkt, in dem die Kupplung voll eingerückt ist und das volle Kupplungsmoment übertragen kann. Dieser Betriebspunkt ergibt sich bei einer neuen, also noch nicht verschleißbehafteten Kupplung. Ausgehend von diesem Betriebspunkt ergibt sich für die Betätigung der Kupplung ein Verlauf der Betätigungskraft, die vom Fahrer aufzubringen ist oder die auch über entsprechende Stellelement aufgebracht werden kann, entsprechend dem Linienzug 24.

Wie sich aus dem Kraft-Weg-Diagramm gemäß Figur 2 ergibt, ist die Lage des Betriebspunktes derartig gewählt, daß die Andrückkraft gemäß dem Linienzug 21, die der Tellerfederkraft entspricht mit abnehmender Dicke der Kupplungsscheibe 6, d. h. also verschleißabhängig zunimmt. Eine solche verschleißabhängige Zunahme ist unter anderem deshalb unerwünscht, weil sie die Betätigungscharakteristik im Sinne einer schwereren Kupplungsbetätigung verändert, was schon aus Komfortgründen unerwünscht ist.

Anzustreben ist demgegenüber im Rahmen der Erfindung ein Verlauf der Andrückkraft, wie er durch den strichpunktierten Linienzug 25 in Figur 2 veranschaulicht ist, also ein Verlauf, bei dem die Andrückkraft über dem Weg im wesentlichen konstant bleibt, so daß sich verschleißabhängig keine Änderungen in der Betätigungskraft ergeben und somit das Kupplungsgefühl für die Bedienperson verschleißunabhängig, und damit gleichbleibend ist.

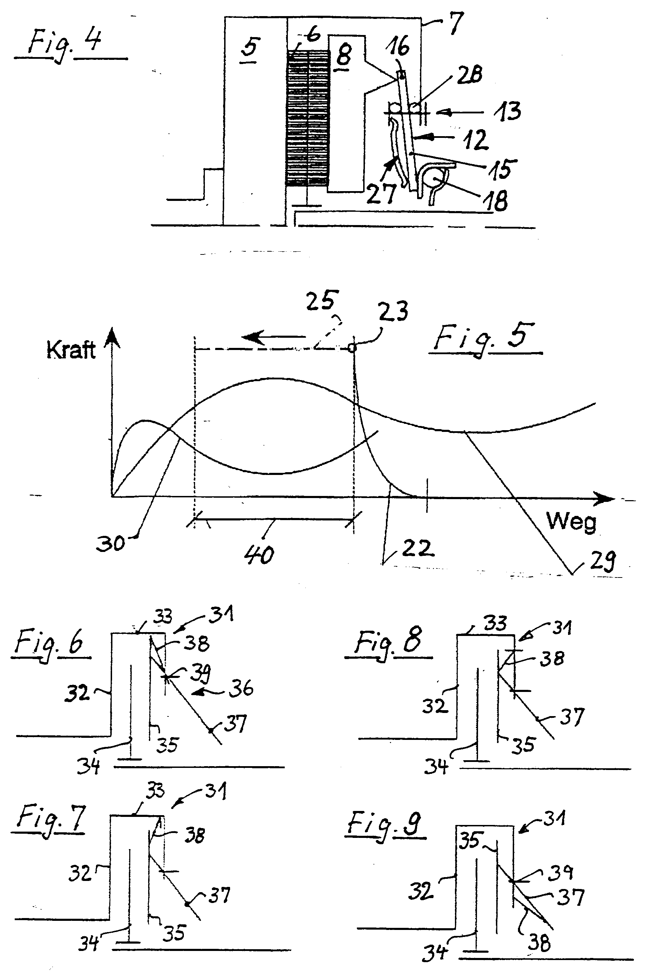

Erreicht wird dies über die Erfindung mit Lösungen, wie sie beispielsweise in den Figuren 3 und 4 dargestellt sind, wobei hier in Anlehnung an Figur 1 und die dortige Darstellung einer im Aufbau bekannten Reibungskupplung, soweit entsprechend, gleiche Bezugszeichen Verwendung finden.

Während in Figur 1 die Federanordnung in der Betätigung der Kupplung zwischen der Ausrückvorrichtung 17 und der Druckplatte 8 lediglich eine Tellerfeder 12 umfaßt, ist bei den Ausgestaltungsformen gemäß Figuren 3 und 4 eine Federanordnung vorgesehen, die über die Tellerfeder 12 hinaus zusätzliche Federmittel in Form einer Zusatzfeder 26 in Figur 3, bzw. 27 in Figur 4 umfaßt.

Die Zusatzfeder 26 gemäß Figur 3 ist in nicht näher dargestellter Weise gegenüber dem Gehäuse 7 der Kupplung 2 abgestützt, und zwar in dessen radial äußerem Bereich, und sie erstreckt sich nach radial innen, wo sie die Tellerfeder 12 im Bereich von deren radial äußeren Ringbereich beaufschlagt, und zwar im Sinne einer Erhöhung der Andrückkraft gemäß Pfeil 19 in Figur 1. Beide Federn, Tellerfeder 12 und Zusatzfeder 26 bilden im vorliegenden Fall also Druckfedern.

Entsprechend ist die Situation bei einer Lösung gemäß Figur 4, bei der die Tellerfeder 27 im Bereich der die Schwenklagerung für die Tellerfeder 12 bildenden Ringzone 13 am Gehäuse 7 bzw. der gehäuseseitigen Schwenklagerung 28 der Tellerfeder 12 abgestützt ist. Von der Schwenklagerung 28 erstreckt sich die Zusatzfeder 27, ebenfalls in Form einer Tellerfeder ausgebildet, radial nach innen und beaufschlagt die Tellerfeder 12 im Bereich ihres Ringbereiches 15, bevorzugt nahe dessen radial innerer Begrenzung.

Auch bei der Augestaltung gemäß Figur 4 wirkt die Tellerfeder 27 als Druckfeder, wobei entsprechend den Hebelverhältnissen der Tellerfeder 12 auch der von der Zusatztellerfeder 27 aufgebrachte Kraftanteil übersetzt wird.

Wie anhand der Ausführungsbeispiele gemäß Figuren 3 und 4 erläutert, wird über die als Tellerfedern ausgebildeten Zusatzfedern 26 und 27 bezogen auf die Druckplatte 6 eine Druckkraft ausgeübt, die sich der von der Tellerfeder 12 aufgebrachten Druckkraft überlagert. Figur 5 zeigt nun, daß durch entsprechende Auslegung des Kraft-Wegverlaufes der Tellerfeder 12 und der jeweiligen Zusatzfeder 26 bzw. 27 ein Kraft-Wegverlauf der Andrückkraft erreicht werden kann, der dem Kraft-Wegverlauf 25 in Figur 2 entspricht. Bei der erfindungsgemäßen Lösung ist dies dadurch erreichbar, daß bei einem Kraft-Wegverlauf der Tellerfeder, z. B. der Tellerfeder 12 gemäß Figuren 3 oder 4 entsprechend dem Linienzug 29 in Figur 5, die durch die Zusatztellerfedern 26 bzw. 27 gebildeten zusätzlichen Federmittel einen Kraft-Wegverlauf aufweisen, der dem Linienzug 30 in Figur 5 entspricht, so daß sich durch Addition der entsprechenden Kräfte eine dem Linienzug 25 im wesentlichen entsprechende, über den Betriebsbereich 40 der Kupplung weitgehend gleichbleibende Andrückkraft ergibt. Die Aufteilung der Kräfte auf die Tellerfeder einerseits und die Zusatztellerfeder andererseits ist zwar theoretisch beliebig, erweist sich aber für die Praxis in dem Sinne als zweckmäßig, daß die Tellerfeder entsprechend dem Linienzug 29 den größeren Anteil der auf die Druckplatte 8 ausgeübten Andrückkraft aufbringt. Im Extrem kann die maximale, von der Tellerfeder aufgebrachte Andrückkraft so groß sein, daß sie betragsmäßig der vollen Andrückkraft entspricht, ein Fall, bei dem der Linienzug 29 mit seinem Scheitel den Linienzug 25 tangieren würde. Über die zusätzlichen Federmittel, symbolisiert durch den Linienzug 30 wären dann nur noch geringe Kraftanteile aufzubringen, was zumindest theoretisch durch entsprechende Auslegung der Zusatztellerfeder möglich ist.

Weitere mögliche Anordnungsmöglichkeiten für die zusätzlichen Federmittel, die im Rahmen der Erfindung natürlich nicht nur durch Tellerfedern gebildet sein können, sind in den Figuren 6 bis 9 veranschaulicht, in denen die Kupplung insgesamt mit 31 bezeichnet ist, und das Schwungrad mit 32, das Kupplungsgehäuse mit 33, die Kupplungsscheibe 34, die Druckplatte mit 35 und die Federanordnung insgesamt mit 36 bezeichnet sind. Die Federanordnung 36 umfaßt jeweils wiederum die über die hier nicht dargestellte Ausrückvorrichturg beaufschlagbare Tellerfeder 37 sowie als zusätzliche Federmittel im Ausführungsbeispiel wiederum eine Zusatzfeder 38.

Die Zusatzfeder 38 beaufschlagt in den Figuren 6 und 7 die Druckscheibe 35 direkt, in Figur 8 die Tellerfeder 37 im Bereich ihres der Druckscheibe 35 benachbarten Endes und in Figur 9 die Tellerfeder 37 im Bereich ihres der Ausrückvorrichtung benachbarten Endes. Bezüglich der gehäuseseitigen Abstützung der Zusatzfeder 38 sind ebenfalls verschiedene Varianten veranschaulicht, so in Figur 6 die Abstützung der Zusatzfeder 38 am Gehäuse 33 im Bereich der Schwenkachse 39 der Tellerfeder, so daß sich für die Zusatzfeder 38 eine Erstreckung schräg nach radial außen vom Gehäuse 31 gegen den äußeren Randbereich der Druckplatte 35 ergibt.

In Figur 7 ist die Feder 38 am Umfang des Gehäuses 31 angeordnet und erstreckt sich radial schräg nach innen gegen die Druckplatte 35.

In Figur 8 ist eine Abstützung der Zusatzfeder 38 im Deckelbereich des Gehäuses 31 vorgesehen, die Zusatzfeder erstreckt sich von einem radial äußeren Deckelbereich radial nach innen gegen die Druckplatte 35. Figur 9 zeigt eine Abwandlung, die der Darstellung gemäß Figur 4 ähnlich ist, wobei die Zusatzfeder 38 hier aber radial innerhalb der Schwenkachse 39 der Tellerfeder 37 am Deckelbereich des Gehäuses 31 abgestützt ist und sich gegen das der nicht gezeigten Andrückvorrichtung benachbarte Ende der Tellerfeder 37 radial nach innen erstreckt.

Die Figuren 6 bis 9 dienen ebenso wie die Figuren 3 und 4 der Veranschaulichung möglicher Anlenkungsformen, die sich als besonders vorteilhaft erweisen, es sind im Rahmen der Erfindung aber selbstverständlich weitere mögliche Anlenkungen denkbar.

Die Erfindung ist sowohl in Verbindung mit gezogenen wie auch mit gedrückten Kupplungen einzusetzen.

Die Erfindung umfaßt auch Kupplungen, bei denen die Ausrückvorrichtung unabhängig von der Tellerfeder auf die Druckplatte wirkt, also Tellerfeder und Ausrückvorrichtung jeweils unabhängig voneinander auf die Druckplatte wirken.

Ferner sind von der Erfindung auch solche Lösungen erfaßt, bei denen anstelle einer Tellerfeder tellerfederartige Federelemente oder auch andere Federelemente eingesetzt sind, die in ihrem Kraft-Wegverlauf über dem Betriebsbereich im Sinne der Erfindung korrigiert werden sollen, also im Hinblick auf eine über den Betriebsbereich im wesentlichen gleichbleibende Andrück- wie auch Ausrückkraft beeinflußt werden sollen.

## Patentansprüche

1. Reibungskupplung, insbesondere für Kraftfahrzeuge, mit eine zwischen zwei Anlageflächen einspannbaren, in ihrer Dicke verschleißabhängigen Kupplungsscheibe und einer der einen Anlagefläche zugehörigen, axial verlagerbaren und drehfest in einem Kupplungsgehäuse angeordneten Druckplatte, die über eine gegenüber dem Kupplungsgehäuse abgestützte Federanordnung beaufschlagbar ist, welche eine über eine Ausrückvorrichtung der Kupplung beaufschlagbare Tellerfeder und zusätzliche Federmittel umfaßt und über die die Andrückkraft der Druckscheibe, die der durch Auslegung vorgegebenen Übertragungsleistung der Kupplung entspricht, bestimmt ist,
**dadurch gekennzeichnet,**
daß über den Betriebsbereich der Kupplung (2) der von der Tellerfeder (12, 37) aufgebrachte Teil der Andrückkraft zumindest teilweise kleiner ist als die der Kupplungsauslegung entsprechende Andrückkraft und daß der fehlende Kraftanteil über die zusätzlichen Federmittel (26, 27, 38) aufgebracht wird.

2. Reibungskupplung nach Anspruch 1,
**dadurch gekennzeichnet,**
daß der von der Telierfeder (12, 27) aufgebrachte Teil der Andrückkraft kleiner ist als die der Kupplungsauslegung entsprechende Andrückkraft.

3. Reibungskupplung nach Anspruch 1 oder 2,
**dadurch gekennzeichnet,**
daß die zusätzlichen Federmittel (38) sich direkt auf die Druckplatte (35) abstützen.

4. Reibungskupplung nach Anspruch 1 oder 2,
**dadurch gekennzeichnet,**
daß die zusätzlichen Federmittel (26, 27, 38) sich indirekt auf die Druckplatte (8, 35) abstützen.

5. Reibungskupplung nach Anspruch 4,
**dadurch gekennzeichnet,**
daß die zusätzlichen Federmittel (26, 27, 38) sich auf die Tellerfeder (12, 37) abstützen.

6. Reibungskupplung nach Anspruch 5,
**dadurch gekennzeichnet,**
daß die zusätzlichen Federmittel (26) sich gegen den zwischen Druckplatte (8) und Abstützung (13) der Tellerfeder (12) am Kupplungsgehäuse (7) liegenden Arm (15) der Tellerfeder (12) abstützen.

7. Reibungskupplung nach Anspruch 5,
**dadurch gekennzeichnet,**
daß die zusätzlichen Federmittel (27) sich gegen den zwischen der Abstützung (13) der Tellerfeder (12) am Kupplungsgehäuse (7) und der Ausrückvorrichtung (17) der Kupplung (2) liegenden Arm (16) der Tellerfeder (27) abstützen.

8. Reibungskupplung nach einem der vorhergehenden Ansprüche,
**dadurch gekennzeichnet,**
daß die zusätzlichen Federmittel als Zugfedern ausgebildet sind.

9. Reibungskupplung nach einem der Ansprüche 1 bis 7,
**dadurch gekennzeichnet,**
daß die zusätzlichen Federmittel als Druckfedern ausgebildet sind.

10. Reibungskupplung nach Anspruch 8 oder 9,
**dadurch gekennzeichnet,**
daß die zusätzlichen Federmittel als Tellerfedern ausgebildet sind.

11. Reibungskupplung nach einem der vorhergehenden Ansprüche,
**dadurch gekennzeichnet,**
daß die zusätzlichen Federmittel (26) direkt gegen das Kupplungsgehäuse (7) abgestützt sind.

12. Reibungskupplung nach einem der Ansprüche 1 bis 10,
**dadurch gekennzeichnet,**
daß die zusätzlichen Federmittel (27) indirekt gegenüber dem Kupplungsgehäuse (7) abgestützt sind.

13. Reibungskupplung nach Anspruch 12
**dadurch gekennzeichnet,**
daß die zusätzlichen Federmittel gegenüber einer in Abhängigkeit vom Verschleiß der Kupplungsscheibe arbeitenden Nachstellvorrichtung abgestützt sind.

14. Reibungskupplung nach Anspruch 13,
**dadurch gekennzeichnet,**
daß die Nachstellvorrichtung in der Abstützung der Tellerfeder gegenüber dem Kupplungsgehäuse angeordnet ist.
